# DEMANDE DE BREVET EUROPEEN

(11) **EP 0 545 792 A1**
(43) Date de publication de la demande: **09.06.1993**
(21) Numéro de dépôt: 92403202.2
(22) Date de dépôt: 27.11.1992
(51) Int. Cl.: B23K 9/18, B23K 9/04

(54) **Procédé de soudage/rechargement à l'arc et dispositif de mise en oeuvre**

(30) Priorité: 29.11.1991 FR 9114804
(71) Demandeur: CHPO ARDEL S.A., F-91260 Juvisy-Sur-Orge (FR)
(72) Inventeur: Pignard, Gilbert, F-91260 Juvisy-Sur-Orge (FR)
(74) Mandataire: Martin, Jean-Jacques

(57) **Abrégé**

Procédé de soudage/rechargement à l'arc du type comprenant une opération qui consiste à distribuer de manière continue un fil (11) métallique de soudure formant une électrode fusible de soudage à travers un passage (31) ménagé dans un tube de contact électrique (30).

Selon l'invention, ledit procédé comprend en outre une opération qui consiste à distribuer une poudre (41) métallique de soudure à travers ledit passage par un gaz (51) d'entraînement, ledit fil métallique et ladite poudre métallique formant un cordon de soudure par fusion sous l'action dudit arc de soudage.

Application au rechargement des moules de verrerie en bronze avec des alliages à base de nickel ou de cobalt.

## Description

La présente invention concerne un procédé de soudage/rechargement à l'arc du type comprenant une opération qui consiste à distribuer de manière continue un fil métallique de soudure formant une électrode fusible de soudage à travers un passage ménagé dans un tube de contact électrique. Elle concerne également un dispositif pour la mise en oeuvre de ce procédé de soudage/rechargement à l'arc.

On entendra ici par rechargement l'opération consistant à revêtir d'une protection la surface neuve ou usagée d'un objet afin d'améliorer, à titre préventif, les caractéristiques de surface du matériau constituant l'objet ou de corriger, à titre de réparation, un défaut de dimension de l'objet usagé.

L'invention trouve une application particulièrement avantageuse, notamment dans l'industrie du verre, pour recharger avec des alliages à base de nickel ou de cobalt des outillages en bronze tels que des moules qui sont utilisés pour la mise en forme de récipients en verre.

Lorsque les verriers utilisaient des moules constitués de fonte ou d'aciers alliés, le rechargement de ces moules avec des alliages à base de nickel ou de cobalt s'effectuait à la flamme chimique, Oxy-Acétylénique par exemple. La mise en oeuvre de ce procédé ne posait alors aucun problème car la température de fusion du matériau support, 1450°C pour l'acier et 1300°C pour la fonte, était supérieure aux températures de fusion des alliages de revêtement, 1050°C à 1150°C pour les alliages à base de nickel ou de cobalt.

En effet, ce procédé de rechargement à la flamme chimique consiste à fondre les alliages constituant le revêtement directement sur la surface du matériau support pour provoquer la diffusion en surface desdits alliages dans ledit matériau support.
De ce fait, ce procédé ne peut s'utiliser convenablement que si la température de fusion du matériau support est supérieure à celles des alliages de revêtement déposés.

Depuis peu de temps, l'industrie du verre utilise des moules en bronze qui présentent, avantageusement, une conductibilité thermique supérieure à celle de la fonte ou des aciers alliés et permettent alors d'augmenter les productions de verres d'emballage sur les chaînes de fabrication.

Toutefois, le bronze présente l'inconvénient de fondre à une température inférieure aux températures de fusion des alliages à base de nickel ou de cobalt.

En conséquence, il devient impossible d'utiliser convenablement le procédé de rechargement à la flamme chimique pour protéger des moules en bronze avec des alliages à base de nickel ou de cobalt, au risque de provoquer la fusion totale desdits moules.

Actuellement, les verriers souhaitant utiliser les mêmes alliages à base de nickel ou de cobalt comme revêtement de leurs outillages en bronze, sont amenés à utiliser des procédés de rechargement connus dont aucun n'est satisfaisant.

Ainsi le procédé de soudage/rechargement TIG ou Tungstène Inerte Gaz consiste à produire un arc électrique entre une pièce à souder et une électrode en tungstène non consommable sous la protection d'argon ou d'hélium et de distribuer latéralement à l'électrode en tungstène des alliages de soudure se présentant sous la forme essentiellement de baguettes qui fondent sous l'action dudit arc pour former le cordon de soudure. Le procédé TIG est un procédé relativement lent et l'utilisation des baguettes ne permet pas d'obtenir les mêmes nuances d'alliages à base de nickel ou de cobalt que celles obtenues en utilisant des poudres.

En outre, on connaît du document GB-A-2130 242 un procédé qui consiste à produire un arc électrique entre une pièce en fonte et une électrode en tungstène sous un plasma, et de distribuer de la poudre d'alliages à base de nickel afin de réaliser un revêtement en alliage à base de nickel, lié par soudure, sur ladite pièce.

Ce procédé est utilisé uniquement pour fabriquer un revêtement en alliage à base de nickel sur une pièce en fonte, et n'est pas adapté au soudage/ rechargement des pièces en bronze.

De même on connaît du document US-4 864 094 une technique de plasma appliquée au rechargement des angles d'articles coupants et forets avec des alliages à base de colbalt ou de nickel, selon laquelle on distribue uniquement des poudres d'alliages seules sous un arc à plasma. Cette technique n'est pas satisfaisante pour recharger des moules en bronze avec des alliages nuancés à base de nickel ou de cobalt.

Par ailleurs, on connaît des procédés plus classiques tels que les procédés MIG et MAG ou Métal Inerte Gaz et Métal Actif Gaz qui consistent à distribuer en continu un fil de soudure formant une électrode fusible de soudage à l'arc sous la protection d'un gaz inerte ou actif, le fil de soudure fusionnant sous l'action de l'arc électrique pour former le cordon de soudure. Ces procédés MIG et MAG classiques sont utilisés essentiellement pour du soudage car ils ne permettent pas d'utiliser toutes les nuances d'alliages à base de nickel ou de cobalt utilisées sous forme de poudres pour le rechargement des moules en bronze.

Enfin, on connaît du document japonais JP-A-58 100 974 une méthode de contrôle du flux de poudre dans un procédé de soudage connu dit à "arc submergé" qui consiste à distribuer à l'extrémité d'une torche de soudage un fil métallique de soudure et de la poudre d'alliages par des conduits séparés, le fil métallique et la poudre étant fondus ensemble sous un arc électrique sur la pièce à souder, à partir d'orifices individuels pour former le cordon de soudure. Cette technique ne permet pas de doser correctement la proportion de fil métallique et de poudre du fait que la poudre et le fil de soudure arrivent sur la pièce à souder par des orifices séparés et donc ne permet pas d'obtenir des alliages de revêtement homogènes et nuancés pour le soudage/rechargement des moules en bronze ou bien en fonte.

Aussi le problème technique à résoudre par l'objet de la présente invention est de proposer un procédé de soudage/rechargement à l'arc conforme au préambule qui permettrait, notamment, de recharger avec des alliages à base de nickel ou de cobalt des moules en bronze, sans provoquer la fusion du bronze, et qui présenterait une mise en oeuvre simple et économique.

La solution au problème technique posé consiste, selon l'invention, en ce que ledit procédé comprend, en outre, une opération qui consiste à distribuer une poudre métallique de soudure à travers ledit passage, ledit fil métallique et ladite poudre métallique formant un cordon de soudure par fusion sous l'action dudit arc de soudage.

Ainsi, le procédé selon l'invention permet de réaliser, avantageusement des alliages de rechargement pour des moules de verreries, en fusionnant le fil métallique de soudure et des poudres, par exemple, d'alliages à base de nickel ou de cobalt.
D'autre part, cette fusion s'effectuant sous l'action de l'arc électrique, on évite de fondre totalement le bronze qui constitue le matériau des moules de verreries.
Il convient de préciser que le procédé selon l'invention provoque la fusion superficielle du bronze, ce qui produit en surface, une dilution du cordon de soudure en fusion avec le bronze. Cette dilution est facilement contrôlable et de ce fait garantit une bonne liaison métallurgique entre le bronze et le cordon de soudure.

En outre, la mise en oeuvre du procédé de soudage/rechargement à l'arc selon l'invention est simple et peu onéreuse.

En effet, suivant un mode de réalisation, un dispositif pour la mise en oeuvre du procédé de soudage/rechargement à l'arc selon l'invention, comporte :
- un tube de contact électrique disposé à une extrêmité d'un tuyau distributeur et dans lequel est ménagé un passage,
- un dévidoir de fil métallique de soudure, destiné à dévider de manière continue le fil métallique dans ledit tuyau distributeur destiné à distribuer en continu ledit fil métallique à travers ledit passage,
- un réservoir de poudre métallique de soudure destiné à alimenter le tuyau distributeur en poudre métallique, ledit tuyau distributeur étant également destiné, à distribuer ladite poudre métallique à travers ledit passage du tube de contact électrique.

Ainsi, le dispositif selon l'invention permet de recharger un moule en bronze à une vitesse d'exécution dix fois supérieure à celle du procédé TIG et pour un coût d'investissement faible, supportable notamment pour une entreprise de taille moyenne.

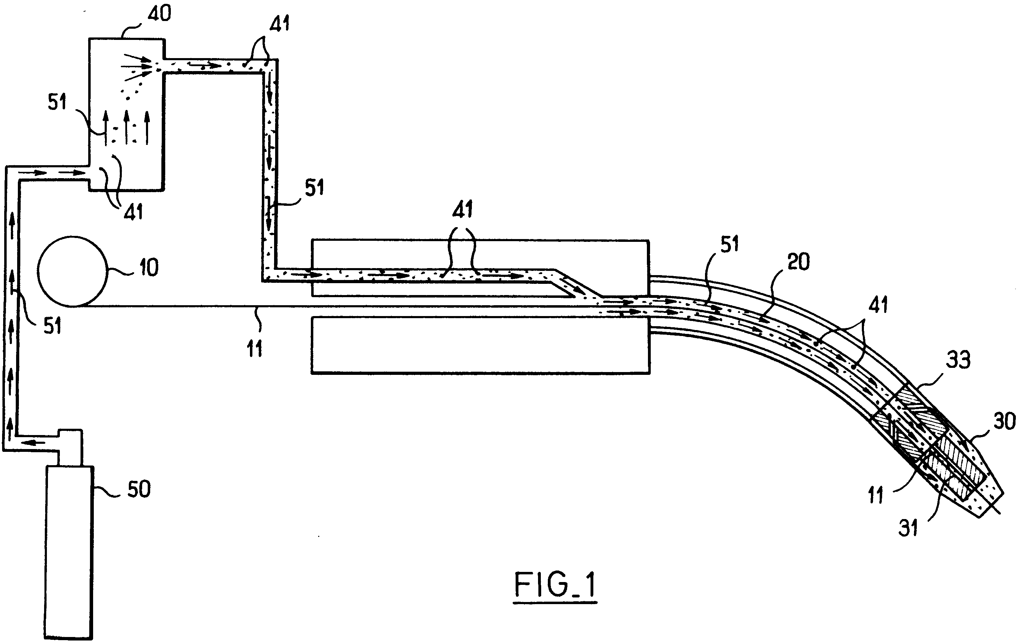

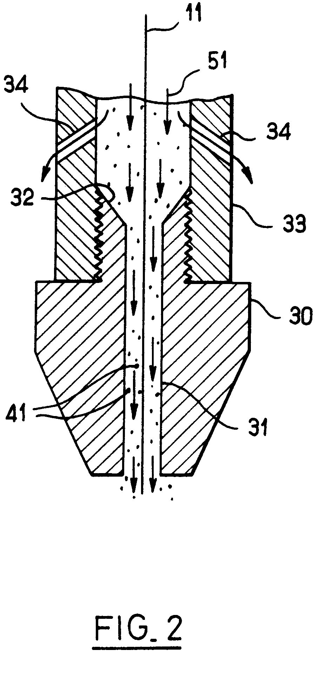

La description qui va suivre en regard des dessins annéxés, donnés à titre d'exemples non limitatifs, fera bien comprendre en quoi consiste l'invention et comment elle peut être réalisée.
. La figure 1 est un schéma d'ensemble d'un mode de réalisation du dispositif pour la mise en oeuvre du procédé de soudage/rechargement à l'arc selon l'invention.
. La figure 2 est un schéma détaillé du tube de contact électrique du dispositif de la figure 1.

En référence à la figure 1, on a représenté un dispositif pour la mise en oeuvre du procédé de soudage/rechargement à l'arc conforme à l'invention. Ce dispositif comporte un dévidoir 10 de fil 11 métallique de soudure, destiné à dévider le fil 11 métallique dans un tube distributeur 20.

Ce tube distributeur 20 est destiné, notamment, à distribuer ledit fil 11 de manière continue à travers un passage 31 ménagé dans un tube de contact électrique 30 raccordé directement audit tuyau distributeur 20. Le fil 11 métallique de soudure forme une électrode de soudage fusible, reliée par l'intermédiaire du tube de contact 30 à la borne négative par exemple, d'un générateur de soudage non représenté qui crée un arc électrique de soudage entre ledit fil 11 métallique et une pièce à souder ou à recharger reliée elle-même à la borne opposée, ici positive, dudit générateur.

En outre, comme le montre la figure 1, ce dispositif comporte un réservoir 40 de poudre 41 métallique de soudure, destiné à alimenter le tuyau distributeur 20, ce tuyau distributeur 20 étant également destiné à distribuer ladite poudre 41 métallique à travers ledit passage 31 du tube contact électrique 30. La poudre 41 métallique et le fil 11 métallique étant distribués avantageusement par le même orifice, forment à la surface de la pièce à recharger, un cordon de soudure par fusion sous l'action dudit arc de soudage.

Suivant le mode de réalisation présenté par la figure 1, le tuyau distributeur est réalisé en téflon ou en métal. Il convient de préciser que le tube de contact électrique 30 étant peu encombrant, l'ensemble du tuyau distributeur 20 et dudit tube 30 est facilement maniable pour un soudeur et permet notamment le rechargement d'objets de petites tailles présentant des surfaces concaves aux courbures importantes tels que des moules de verrerie, par exemple des moules pour la mise en forme de goulots de bouteilles.

Dans le cas du rechargement des moules de verrerie, la poudre 41 métallique de soudure est avantageusement, une poudre d'alliages à base de nickel dont la composition chimique est par exemple 0,03C1,1B2Si0,5Fe-20Cr86,37Ni ou bien une poudre d'alliages à base de cobalt de composition chimique par exemple 1,3C2,5B3Si19Cr2,5Fe13Ni13W45,7Co, ou encore une poudre d'alliages à base de nickel et de cobalt.

Ces poudres d'alliage sont réalisées à des granulomètries spécifiques et forment avec le fil 11 métallique de soudure des alliages de rechargement adéquates, pour protéger les moules de verreries.

Comme on peut le voir sur la figure 1, la poudre 41 métallique de soudure est distribuée à travers le passage 31 du tube de contact 30, par un gaz 51 d'entraînement sous pression.

Ce gaz 51 d'entraînement sous pression provient d'une bouteille de gaz 50 et traverse le réservoir 40 contenant ladite poudre 41 afin de la transporter à travers la tuyauterie du dispositif jusqu'à la sortie du tube de contact électrique 30.

Il convient de préciser que la pression du gaz 51 est réglée pour un débit de poudre 41 métallique constant fixé par l'utilisateur.

De plus, le gaz 51 d'entraînement constitue un gaz de protection du cordon de soudure contre l'oxydation. Il protège également contre l'oxydation, le tube de contact électrique 30 qui est avantageusement réalisé en alliage de cuivre.

En effet, le gaz 51 est soit un gaz inerte, par exemple de l'Argon, soit un gaz actif, par exemple du CO₂ ou de l'Atal (Marque Déposée). Comme le montre mieux la figure 2, une partie du gaz 51 qui arrive à l'embouchure supérieure du passage 31 du tube de contact 30, est diffusée à travers des trous 34, à l'extérieur d'un tube 33 de raccordement au tuyau dustributeur 20 pour protéger l'extérieur du tube de contact 30. Les trous de diffusion sont assez petits pour éviter que la poudre 41 ne les traverse.

D'autre part, suivant le mode de réalisation montré en détail par la figure 2, le passage 31 est de forme essentiellement tubulaire et comporte une portion évasée 32 formant l'embouchure supérieure pour le raccordement du tube de contact électrique 30 avec le tube de raccordement. Le tube de contact électrique 30 est vissé de façon parfaitement hermétique à l'intérieur du tube 33 de raccordement.

Il convient de préciser que le dispositif montré sur les figures 1 et 2 est aussi particulièrement recommandé pour protéger notamment des outils de production, autres que les moules de verreries en bronze, qui sont soumis à des sollicitations d'abrasion intenses. Ces outils de production proviennent, par exemple, d'une cimenterie, d'une fonderie ou bien encore de l'industrie agricole.

Dans ce cas, le dispositif des figures 1 et 2 permet la mise en oeuvre du procédé de soudage/rechargement à l'arc selon l'invention pour déposer à la surface de ces outils de production des alliages à très hautes caractéristiques qui contiennent des carbures afin de protéger ces outils contre l'abrasion.

Bien entendu, la présente invention n'est nullement limitée à la forme de réalisation décrite et représentée, mais l'homme du métier saura y apporter toute variante conforme à son esprit.

## Revendications

1. Procédé de soudage/rechargement à l'arc du type comprenant une opération qui consiste à distribuer de manière continue un fil (11) métallique de soudure formant une électrode fusible de soudage à travers un passage (31) ménagé dans un tube de contact électrique (30), caractérisé en ce que ledit procédé comprend, en outre, une opération qui consiste à distribuer une poudre (41) métallique de soudure à travers ledit passage (31), ledit fil (11) métallique et ladite poudre (41) métallique formant un cordon de soudure par fusion sous l'action dudit arc de soudage.

2. Procédé de soudage/rechargement à l'arc selon la revendication 1, caractérisé en ce que la poudre (41) métallique de soudure est distribuée à travers ledit passage (31) par un gaz (51) d'entraînement.

3. Procédé de soudage/rechargement à l'arc selon la revendication 2, caractérisé en ce que le gaz (51) d'entraînement constitue également un gaz de protection du cordon de soudure contre l'oxydation.

4. Procédé de soudage à l'arc selon l'une quelconque des revendications 1 à 3, caractérisé en ce que la poudre (41) métallique est une poudre d'alliages à base de nickel.

5. Procédé de soudage à l'arc selon l'une quelconque des revendications 1 à 3, caractérisé en ce que la poudre (41) métallique est une poudre d'alliages à base de cobalt.

6. Procédé de soudage à l'arc selon l'une quelconque des revendications 1 à 3, caractérisé en ce que la poudre (41) métallique est une poudre d'alliages à base de nickel et de cobalt.

7. Dispositif pour la mise en oeuvre du procédé de soudage/rechargement à l'arc selon l'une quelconque des revendications 1 à 6, caractérisé en ce qu'il comporte :
- un tube (30) de contact électrique disposé à une extrêmité d'un tuyau distributeur (20) et dans lequel est ménagé un passage (31),
- un dévidoir (10) de fil (11) métallique de soudure, destiné à dévider de manière continue le fil (11) métallique dans ledit tuyau distributeur (20) destiné à distribuer en continu ledit fil (11) métallique à travers ledit passage (31),
- un réservoir (40) de poudre (41) métallique de soudure destiné à alimenter le tuyau distributeur (20) en poudre (41) métallique, ledit tuyau distributeur (20) étant également destiné à distribuer ladite poudre (41) métallique à travers ledit passage (31) du tube de contact électrique (30).

8. Dispositif selon la revendication 7, caractérisé en ce que le tube de contact électrique (30) est en alliage de cuivre afin de résister à une usure trop rapide.

9. Fil métallique de soudure et poudres d'alliages pour la mise en oeuvre du procédé selon l'une quelconque des revendications 1 à 6, caractérisés en ce que les poudres d'alliages présentent des granulomètries spécifiques et forment avec le fil métallique de soudure des alliages de rechargement/soudure adéquates pour les moules de verreries.
